# EUROPÄISCHE PATENTSCHRIFT

(11) **EP 1 402 842 B1**
(45) Veröffentlichungstag und Bekanntmachung des Hinweises auf die Patenterteilung: **20.11.2013**
(21) Anmeldenummer: 03018054.1
(22) Anmeldetag: 07.08.2003
(51) Int. Cl.: A61C 5/06

(54) **Auftragsvorrichtung für Komponenten eines Dentalmaterials**
Application device for components of a dental material
Dispositif d'application pour des composants d'un produit dentaire

(30) Priorität: 24.09.2002 DE 10244424
(43) Veröffentlichungstag der Anmeldung: 31.03.2004
(73) Patentinhaber: Ivoclar Vivadent AG, 9494 Schaan (LI)
(72) Erfinder: Schenck, Laurent, Dr., 6820 Frastanz (AT); Gabriel, Philipp, Dr., 6830 Rankweil (AT); Riethmüller, Steffen, 9443 Widnau (CH)
(74) Vertreter: Splanemann

(56) Entgegenhaltungen:
- DE-A- 19 951 504
- DE-U- 20 104 819

## Beschreibung

Die Erfindung betrifft eine Auftragvorrichtung, gemäss dem Oberbegriff von Anspruch 1.

Auftragvorrichtungen für Komponenten eines Dentalmaterials sind in vielfältigen Ausgestaltungen bekannt. So ist beispielsweise aus der US-PS 5,240,415 eine Auftragvorrichtung für Komponenten eines Dentalmaterials bekannt. Bei dieser Lösung ist eine Flasche zusammen mit einem Spatel als Auftragelement und einem Dentalmaterial in einer gemeinsamen Umpackung nach der Art einer Blisterpackung aufgenommen. Eine derartige Lösung ist zwar im Grunde recht hygienisch und unproblematisch von der Handhabung, jedoch dann nicht geeignet, wenn anstelle einer Flüssigkeit und einer pulverförmigen Komponente zwei Flüssigkeiten verwendet werden sollen.

Aus der DE 199 51 504 A ist eine Mischvorrichtung zur Herstellung von Dentalmassen aus pastösen oder flüssigen Komponenten bekannt, bei der die Voschubgeschwindigkeiten der Kolben von die einzelnen Komponenten enthaltenden Kartuschen und ggf. auch die Rotationsgeschwindigkeit eines dynamischen Mischers unabhängig voneinander steuerbar sind. Dabei sollen die Kartuschen maschinenlesbar kodiert sein, wodurch eine automatische Erfassung der Komponenten und dadurch eine selbsttätige Steuerung ermöglicht werden. Dieses Dokument bildet die Basis für den Oberbegriff des Anspruchs 1.

Darüber hinaus beschreibt die DE 201 04 819 U eine Anordnung zur dosierten Abgabe von pastösen Komponenten eines Dentalmaterials, bei der die einzelnen Massen in Kartuschen gelagert und mittels Kolben aus diesen ausgepresst werden sollen, wobei sowohl die beiden Kartuschenkörper als auch die beiden Kolben je eine feste konstruktive Einheit bilden, wodurch die synchrone Abgabe der beiden Komponenten (und damit ein festes Mischungsverhältnis) sichergestellt werden können soll.

Ferner ist aus der US-PS 5,106,297 eine Auftragvorrichtung bekannt, bei welcher eine Mischunterlage verschiedene Formen für unterschiedliche Dentalkomponenten aufweisen kann. Bei dieser Lösung können Flaschen mit entsprechenden Flüssigkeiten wie Bondmaterial oder andere Flüssigkeiten in zwei gleichartige Vertiefungen eingebracht werden. Auch hier erfolgt eine gewisse Formkodierung, denn die Vertiefungen weisen Schultern auf, die zu unterschiedlichen Flaschen passen sollen.

Zwar wird durch die unterschiedlichen Formgebungen der Vertiefungen eine gewisse Orientierung für den Zahnarzt oder Zahntechniker bereitgestellt. Auch hier besteht jedoch die Gefahr, dass Flüssigkeiten, die sich miteinander nicht vertragen, versehentlich in die falsche Vertiefung eingebracht werden. Die Mischunterlage wird hierdurch unbrauchbar, denn es ist nicht sichergestellt, dass nicht Reste der anderen Flüssigeit in der betreffenden Vertiefung sind.

Aus der JP-2000/85860 ist ferner eine Mehrfachanordnung von Flaschen bekannt, die Dentalmaterialien aufnehmen können. Jede Flasche weist einen Deckel auf, und die Deckel beider Flaschen sind je unterschiedlich geformt, um eine leichtere Unterscheidung zu ermöglichen.

Beide Flaschen sind in einem gemeinsamen Flaschenhalter aufgenommen. Sie sind recht fest eingesteckt, so dass auch ein Applizieren der betreffenden Flüssigkeiten möglich sein soll, ohne dass die Einzelflaschen aus dem Flaschenhalter herausfallen. Um ein Ausdrücken zu ermöglichen, sind spezielle Druckflächen vorgesehen, über die durch den Flaschenhalter hindurch die Flaschen ausgedrückt werden können. Zusätzlich ist eine Abdeckhaube vorgesehen, die für beide Flaschen gemeinsam besteht.

Bei dieser Lösung ist es möglich, eine oder auch beide leeren Flaschen aus dem Flaschenhalter zu entnehmen und durch neue zu ersetzen. Hierbei besteht allerdings die Gefahr, dass die beiden Flaschen in ihrer Position verwechselt werden, denn die beiden Ausnehmungen für die Flaschen weisen im Wesentlichen die gleichen Abmessungen auf. Etwaige Reste von Dentalkomponenten, die den rechten oder den linken Bereich der Abdeckhaube bzw. des Flaschenhalters benetzt haben, können so in Kontakt mit der anderen Flasche oder aus dieser austretenden Komponenten gelangen, was zu entsprechenden Reaktionen führen kann. Auch ist es nicht gewährleistet, dass es nicht beim Anmischen der je betreffenden Flüssigkeit auf der Mischunterlage zu Verwechslungen kommt.

Unter Mischen und Mischunterlage wird hier die Aufbereitung auf einer Unterlage verstanden, bei der wahlweise - aber nicht zwingend - eine weitere Komponente der je betrachteten Komponente hinzugefügt werden kann. Von der Mischunterlage wird die betreffende Komponente mit einem Auftragselement aus der betreffenden Vertiefung entnommen und auf dem Zahn des Patienten aufgebracht. In diesem Zusammenhang ist es ausgesprochen wichtig, dass beispielsweise nicht ein Primer, mit dem die für die Restauration vorzubereitende Zahnoberfläche angeätzt wird, mit Bondmaterial in Kontakt gerät, um eine entsprechende Qualität des Restaurationsergebnisses bereitzustellen und etwaige Regressansprüche zu verhindern. Umgekehrt darf Bondmaterial genauso wenig mit Primer versetzt werden, denn hierdurch würde die Qualität des Restaurationsergebnisses signifikant leiden.

Andererseits ist es auch wichtig, dass die Flaschen, in denen die verschiedenen Komponenten aufgenommen sind, stets gut verschlossen gelagert werden können. Bei der aus der genannten japanischen Patentveröffentlichug bekannten Lösung besteht die Gefahr, dass der Zahnarzt einen Deckel vergisst und die Abdeckhaube schließt, so dass nicht erkannt wird, dass die betreffende Flasche unter der Abdeckhaube nicht verschlossen ist. Wenn eine derartige, fehlerhaft gelagerte Komponente dennoch eingesetzt wird, würde dies die Qualität des Restaurationsergebnisses ebenfalls beeinträchtigen.

Daher liegt der Erfindung die Aufgabe zu Grunde, eine Auftragvorrichtung gemäß dem Oberbegriff von Anspruch 1 zu schaffen, die eine verbesserte Sicherheit für eine gleichbleibende Qualität des Restaurationsergebnisses aufweist.

Diese Aufgabe wird erfindungsgemäß durch Anspruch 1 gelöst. Vorteilhafte Weiterbildungen ergeben sich aus den Unteransprüchen.

Die erfindungsgemäße Lösung zeichnet sich durch die Realisierung einer Auftragvorrichtung mit einer Anzahl von Flaschen aus, die formschlüssig miteinander verbunden und mit einer Abdeckhaube verschließbar sind und die zusammen eine Flascheneinheit bilden. Hierdurch ist sichergestellt, dass nicht eine separater Flaschenhalter erforderlich ist, der Möglichkeiten der Verwechslung bietet. Zudem ist eine derartige Lösung preisgünstig, denn der Flaschenhalter als separat herzustellendes Teil kann entfallen.

Besondere Vorteile ergeben sich durch die erfindungsgemäße Verschließung der Einzelflaschen mit einer gemeinsamen Abdeckhaube. Zunächst ist sichergestellt, dass kein innen liegender Deckel vergessen werden kann, denn die Abdeckhaube selbst dichtet sicher die Auslassöffnungen der Einzelflaschen ab. Durch eine entsprechende Schnappposition kann sichergestellt sein, dass die erwünschte Dichtfunktion gewährleistet ist. Durch die erfindungsgemäße Kodierung jeder Einzelflasche, die mit der zugehörigen Kodierung der Abdeckhaube und der der Mischunterlage übereinstimmt, ist eine maximale Sicherheit gegen Verwechslungen und Vertauschungen gewährleistet. Bevorzugt ist die Kodierung der Abdeckhaube eine Formkodierung, so dass gewährleistet ist, dass die Abdeckhaube nicht falsch herum aufgesteckt wird.

Bevorzugt ist eine Doppelkodierung vorgesehen, um die Sicherheit gegen Verwechslungen noch zu erhöhen. Hierzu kann beispielsweise durch ein entsprechendes grafisches und/oder Farbemblem auf der Einzelflasche und der Mischunterlage die betreffende Zuordnung, auch zur Vertiefung, deutlich gemacht werden. Zusätzlich kann mit einer Ziffer oder einem Buchstaben die Reihenfolge der Behandlung signalisiert werden, und auch hierbei durch die Verwendung einander entsprechender Ziffern oder Buchstaben die Zuordnung unterstrichen werden.

Diese erfindungsgemäße Lösung bietet darüber hinaus den Vorteil, dass mit einem in gleicher Weise gekennzeichneten Auftragselement wie einem Pinsel oder gegebenenfalls einem Spatel auch im Bereich des Auftragens die entsprechenden Maßnahmen gegen Verwechslungen fortgesetzt werden.

Erfindungsgemäß besonders günstig ist es, dass trotz der Verwendung einer preisgünstig herzustellenden und die Abdichtmaßnahmen sicherstellenden Abdeckhaube eine druckdichte Abdichtung möglich ist, so dass auch bei Luftdruckschwankungen im Lagerbereich das Eintreten von Fehlluft ausgeschlossen ist. Hierzu weist die Abdeckhaube bevorzugt von Tubenverschlüssen an sich bekannte Zapfen auf, die in die Auslassöffnung eindringen und dort abdichten. Eine bevorzugte Ausgestaltung eines derartigen Verschlusssystems ist in der nachfolgenden Beschreibung wiedergegeben.

Erfindungsgemäß besonders günstig ist es, dass die Anzahl der Einzelteile für die Aufbewahrung eines Behandlungssystems deutlich reduziert ist. Anstelle von sechs Einzelteilen müssen lediglich drei Einzelteile hergestellt und aufbewahrt werden.

Weitere Vorteile, Einzelheiten und Merkmale ergeben sich aus der nachfolgenden Beschreibung eines Ausführungsbeispiels der Erfindung anhand der Zeichnungen.

Es zeigen:
- Fig. 1: eine schematische Seitenansicht einer Ausführungsform einer erfindungsgemäßen Auftragvorrichtung, wobei eine Flascheneinheit dargestellt ist;
- Fig. 2: eine Seitenansicht auf eine Einzelflasche, auf die Fläche, die der anderen Einzelflasche benachbart ist;
- Fig. 3: eine Draufsicht auf die Flascheneinheit gemäß Fig. 1 von oben;
- Fig. 4: eine Unteransicht einer modifizierten Abdeckhaube für eine erfindungsgemäße Auftragsvorrichtung, für das Aufbringen auf die Flascheneinheit gemäß Fig. 1;
- Fig. 5: eine Seitenansicht der Abdeckhaube gemäß Fig. 4;
- Fig. 6: eine Draufsicht auf einen weiteren Teil einer erfindungsgemäßen Auftragvorrichtung, nämlich eine Mischunterlage;
- Fig. 7: eine Seitenansicht der Mischunterlage gemäß Fig. 6, teilweise aufgebrochen;
- Fig. 8 und Fig. 9: vergrößerte Ausschnitte der Mischvorrichtung gemäß Fig. 6; und
- Fig. 10 und Fig. 11: Ansichten je eines Auftragelements für die erfindungsgemäße Auftragvorrichtung in der hier beschriebenen Ausführungsform.

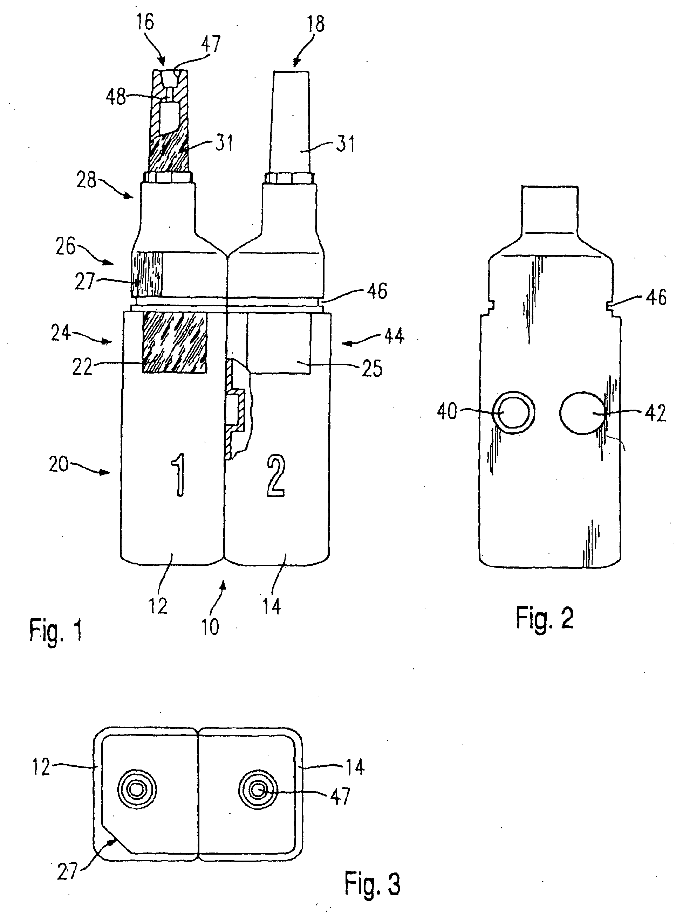

Die in Fig. 1 dargestellte Flascheneinheit 10 weist zwei Einzelflaschen 12 und 14 auf, die in besonderer Weise miteinander verbunden sind. Jede Einzelflasche weist eine schüttfähige Komponente, insbesondere eine Flüssigkeit auf und ist mit einer Auslassöffnung 16 und 18 ausgestattet, durch die die Entnahme der Flüssigkeit aus der Flasche möglich ist. In dem dargestellten Ausführungsbeispiel ist jede Einzelflasche mit drei Kodierungen versehen. Zunächst ist eine Zeichenkodierung 20 vorgesehen, in dem dargestellten Ausführungsbeispiel durch Abbildung von Zahlen "1" und "2" auf der Vorderseite der jeweiligen Einzelflaschen 12 und 14.

Ferner ist eine Farbkodierung 22 auf jeder Einzelflasche vorgesehen. Hierzu weist die Einzelflasche 12 ein schwarzes Farbfeld 24 und die Einzelflasche 14 ein grünes Farbfeld 25 auf. Auch hier sind beide Farbfelder etwa auf der gleichen Höhe vorgesehen.

Aus Fig. 1 ist ferner ersichtlich, dass die Auslassöffnungen im Flaschenhals der Einzelflaschen 12 und 14 je in entsprechenden Kanülen 29 und 31 ausgebildet sind. Die Kanüle 29 ist in schwarzer Farbe gehalten, entsprechend dem schwarzen Farbfeld 24 auf der Einzelflasche 12. Demgegenüber ist die Kanüle 31 in grüner Farbe gehalten, entsprechend dem grünen Farbfeld 25 auf der Einzelflasche 12, auf der sie angebracht ist.

Ferner weist jede Einzelflasche eine Formkodierung 26 auf. Hierzu weist die Einzelflasche 12 eine Schrägfläche 27 ihrem Hals 28 benachbart auf, während die Einzelflasche 14 sich durch das Fehlen einer entsprechenden Schrägfläche auszeichnet.

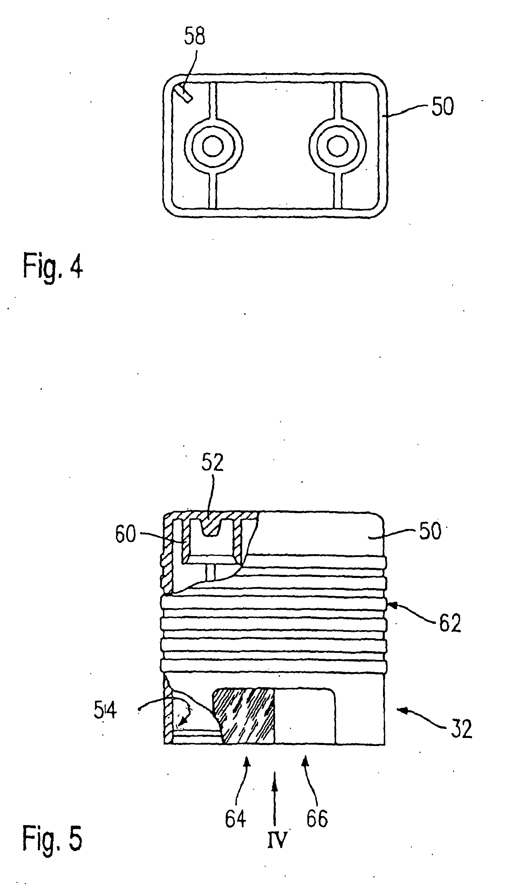

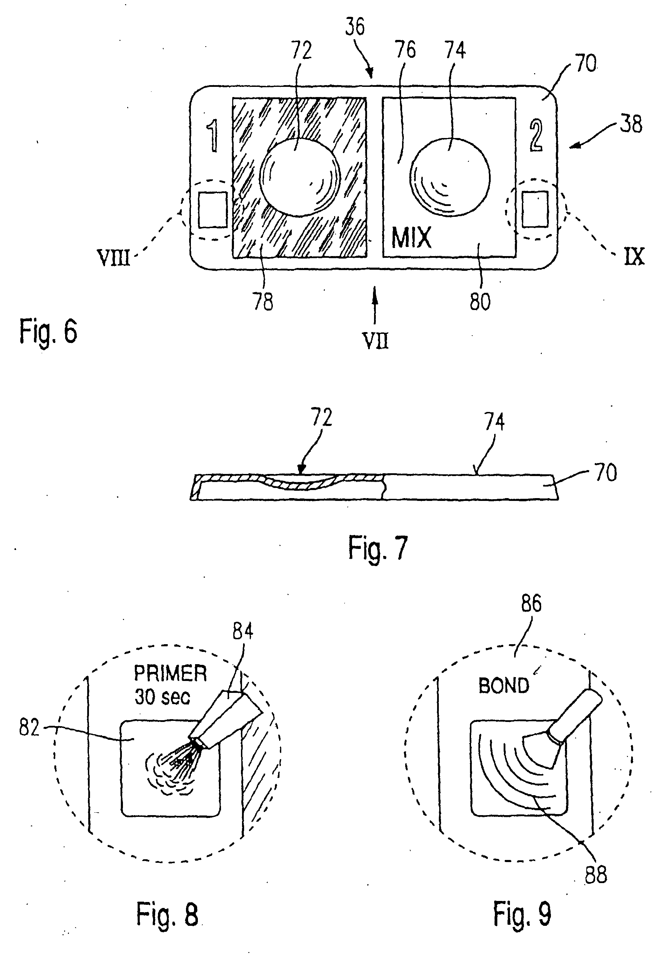

Es ist vorgesehen, dass über je mindestens zwei Kodierungen eine Zuordnung sowohl der Abdeckhaube als auch der Mischunterlage und über mindestens eine Kodierung eine Zuordnung zu dem jeweiligen Auftragelement erfolgt. In dem dargestellten Ausführungsbeispiel ist die Abdeckhaube mit einer Farbkodierung 32 und einer Formkodierung 34 versehen, und die Mischunterlage ist mit einer Farbkodierung 36 und einer Zeichenkodierung 38 versehen, wie es aus den Figuren 5 und 6 ersichtlich ist.

Die Hälse 28 der beiden Einzelflaschen 12 und 14 erstrecken sich vom Flaschenkörper nach oben. Sie sind recht weit außen vorgesehen, um einen vergleichsweise großen Abstand zwischen den Auslassöffnungen 16 und 18 sicherzustellen.

Die beiden Einzelflaschen 12 und 14 sind über Vorsprünge 40 und Vertiefungen 42 aneinander verbunden. Dies ergibt sich aus dem Vergleich der Figuren 1 und 2. Die Bemaßung der Vorsprüngen und Vertiefungen 40 und 42 ist so vorgesehen, dass die beiden Einzelflaschen 12 und 14 auch dann aneinander befestigt bleiben, wenn der Zahnarzt lediglich eine Flasche ergreift.

Durch eine signifikante Kraftaufbringung lassen sich dennoch beide Einzelflaschen 12 und 14 nachträglich trennen, so dass im Grund auch eine Einzel-Nachbefüllung des hier vorgesehenen Fetts aus den beiden unterschiedlichen Komponenten möglich ist.

Die beiden Einzelflaschen bilden zusammen eine Flascheneinheit 10 mit einem gemeinsam umlaufenden Rand 44. Der Rand 44 weist eine Nut 46, die für den Eingriff an einem entsprechenden Vorsprung an der Unterkante der Abdeckhaube bestimmt ist. Dies ist auch aus Fig. 2 recht gut ersichtlich. Fig. 2 zeigt der Einfachheit der Darstellung halber die Auslassöffnungen 16 und 18 nicht. Wie aus Fig. 1 ersichtlich ist, weist jede Auslassöffnung 16 eine Dichtfläche in Form eines Schließkonus 47 auf, der mit der Abdeckhaube 50 gemäß Fig. 4 und 5 zusammenwirkt. Die Abdeckhaube 50 weist hierzu einen ebenfalls konischen Zapfen 52 auf, der in den Schließkonus 47 eindringt und die unterhalb des Schließkonusses vorgesehene Durchlassöffnung 48, die einen vergleichsweise kleinen Durchmesser aufweist, stirnseitig sicher verschließt. Bevorzugt ist die Unterseite des Zapfens 52 zusätzlich mit einem Dichtelement aus Gummi oder dergleichen versehen.

Die Abdeckhaube 50 weist Dichtflächen für die Abdichtung der Auslassöffnungen auf und signalisiert den geschlossenen Zustand durch bündige Anlage an der Flascheneinheit 10.

Für die Bildung eines dichten Verschlusses greift die Abdeckhaube 50 je über die Auslassöffnungen 16 und 18 der Einzelflaschen 12 und 14. Die Abdeckhaube 50 sieht hierzu zusätzlich den Dichtzapfen 52 vor, der in die Auslassöffnungen 16 und 18 eingreift.

Die Abdeckhaube 50 rastet in der Nut 46 mit ihrem Rastvorsprung 54 ein. In diesem Zustand üben die Zapfen 52 Druck auf die Schließkonusse 47 aus, so dass eine sichere Abdichtung gewährleistet ist.

Die Einzelflaschen 12 und 14 weisen je einen rechteckigen Querschnitt und an ihren einander zugewandten Bereichen gerade Wände auf.

Die Einzelflaschen 12 und 14 sind im Bereich ihres Körpers ausschließlich aneinander und im Bereich ihrer Auslassöffnungen 16 und 18 durch die Abdeckdeckhaube 50 miteinander verbunden.

Die Schrägfläche 27 passt im geschlossenen Zustand zusammen mit einer Sperrnase 58 gemäß Fig. 4 der Abdeckhaube 50, so dass eine unverwechselbare Steckposition der Abdeckhaube 50 auf der Flascheneinheit 10 gewährleistet ist. Es können hier beliebige andere geeignete Formkodierungen eingesetzt werden.

Aus Fig. 5 ist ersichtlich, wie der Zapfen 52 sich von der Oberseite der Abdeckhaube 50 nach unten erstreckt. Er ist zusätzlich von einer Schließschürze 60 umgeben, die die Auslasstülle jeder Einzelflasche 12 und 14 umgibt, so dass zusätzlich eine Art Labyrinthdichtung ausgebildet ist. Diese Lösung erlaubt es, auch bei höheren Druckdifferenzen wie 100 mBar oder sogar 150 mBar eine sichere Abdichtung zu gewährleisten, so dass die erfindungsgemäße Auftragvorrichtung ausgesprochen lagersicher ist.

Die Abdeckhaube 50 weist bevorzugt an ihrer Außenseite eine Riffelung 62 auf, die das Abziehen unter Überwindung der Rastkraft des Rastvorsprungs 54 der Nut 46 erleichtert. Aus Fig. 5 ist ferner auch die Realisierung der Farbkodierung 32 und der Formkodierung 34 ersichtlich. Ein Abdeckhaubenbereich 64 ist hierbei der Einzelflasche 12, und ein weiterer Abdeckhaubenbereich 66 ist der Einzelflasche 14 zugeordnet. Die Zuordnung bezieht sich auf die beiden dargestellten Kodierungen.

Fig. 6 zeigt die erfindungsgemäße Mischunterlage mit der Farbkodierung 36 und der Zeichenkodierung 38. Die Mischunterlage 70 weist 2 Vertiefungen 72 und 74 auf, deren Mittelabstand etwa dem Abstand der Auslassöffnungen 16 und 18 entspricht, so dass eine gleichzeitige und parallele Entnahme der jeweiligen Flüssigkeiten möglich ist.

Die Vertiefungen 72 und 74 sind dennoch bevorzugt zentral auf der Mischunterlage 70 vorgesehen, um den Randabstand gegen Verschütten und dergleichen möglichst groß zu halten.

Zwischen ihnen erstreckt sich ein Steg 76, der recht breit gehalten ist, und zudem eine signifikante Farbtrennung aufweist. In dem dargestellten Ausführungsbeispiel ist die Vertiefung 72 von einem schwarzen Farbfeld 78 umgeben, während die Vertiefung 74 von einem grünen Farbfeld 80 umgeben ist.

Außerhalb der Farbfelder 78 und 80 sind je Zeichenkodierungen vorgesehen, die in Form von Ziffern "1" und "2" ausgebildet sind. Diese Ziffern korrespondieren mit der entsprechenden Zeichenkodierung 20 auf den Einzelflaschen 12 und 14 der Flascheneinheit 10 und bieten zugleich einen Hinweis für die Abfolge der Behandlung.

Ferner sind auf der Mischunterlage 70 Gebrauchsinformationen vorgesehen, und zwar in den Feldern VIII und IX, die in Fig. 8 und 9 vergrößert dargestellt sind.

Aus Fig. 7 ist ersichtlich, dass die Mischunterlage 70 je ballige Vertiefungen 72 und 74 aufweist, die nicht ganz bis zur Unterseite reichen. Die Mischunterlage 70 kann recht preisgünstig einstückig hergestellt werden, was auch das Bedrucken mit den hier erfindungsgemäß vorgesehenen Kodierungen erleichtert.

Fig. 8 zeigt eine Gebrauchsinformation für eine Komponente 82, die als sogenannter Primer ausgebildet ist und für 30 Sekunden einwirken soll, wobei durch ein Blassymbol 84 dargestellt ist, dass anschließend hieran ein Blastrocknen vorgenommen werden soll.

Die Gebrauchsinformation 86 im Bereich der Vertiefung 74 zeigt hingegen eine Beschriftung mit "Bond", was auf ein Bondmaterial hindeutet, wie auch ein stilisiertes Lichthärtgerät 88, um deutlich zu machen, dass für die Restaurationskomponente ein Lichthärten erwünscht ist.

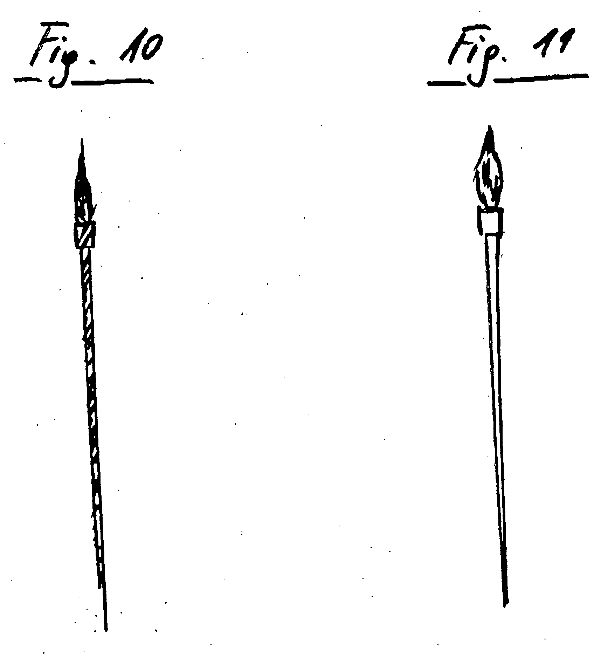

Fig. 10 und 11 zeigen je Auftragelemente in Form von Pinseln. Auch hier hier sind die Farbkodierungen 90 und 92 vorgesehen, in den beiden hier für die Signalisierung gewählten Farben schwarz und grün. Es versteht sich, dass anstelle dieser Farbgebung auch beliebige andere Farbgebungen und auch beliebige andere Auftragelemente anstelle der hier vorgesehenen Auftragelemente 94 und 96 vorgesehen sein können.

## Patentansprüche

1. Auftragvorrichtung für Komponenten eines Dentalmaterials, mit einer Mischunterlage, einer Abdeckhaube und mehreren schüttfähige Komponenten aufnehmenden Einzelflaschen, wobei jede Einzelflasche (12, 14) eine von außen sichtbare Kodierung (22, 25) aufweist, **dadurch gekennzeichnet, dass** die Kodierung (22, 25) jeder Einzelflasche mit der Kodierung (64, 66) des zugehörigen Abdeckhaubenbereichs und der Kodierung (76, 78) der zugehörigen Vertiefung (72, 74) der Mischunterlage (70) übereinstimmt und dass die Einzelflaschen (12, 14) formschlüssig aneinander befestigt sind, insbesondere über Vorsprünge (40) und Vertiefungen (42) an ihren einander zugewandten Flächen.

2. Auftragvorrichtung nach Anspruch 1, **dadurch gekennzeichnet, dass** die Einzelflaschen (12, 14) eine Flascheneinheit (10) bilden und mit einer gemeinsamen Abdeckhaube (50) verschließbar sind.

3. Auftragvorrichtung nach Anspruch 1 oder 2, **dadurch gekennzeichnet, dass** die Kodierungen der Einzelflaschen (12, 14) eine Kodierung der Flascheneinheit (10) bilden, die die Steckposition der Abdeckhaube (50) gegenüber den Einzelflaschen (12, 14) und auf der Flascheneinheit (10) festlegt.

4. Auftragvorrichtung nach einem der vorhergehenden Ansprüche, **dadurch gekennzeichnet, dass** in die Vertiefungen (72, 74) der Mischunterlage (70) Spitzen von Auftragselementen (94, 96) der Auftragvorrichtung einbringbar sind, die je eine Kodierung aufweisen, die der Kodierung der zugehörigen Einzelflasche (12, 14) entsprechen.

5. Auftragvorrichtung nach einem der vorhergehenden Ansprüche, **dadurch gekennzeichnet, dass** die Kodierungen Formgebungskodierungen und/oder Farbgebungskodierungen (22) sind.

6. Auftragvorrichtung nach einem der vorhergehenden Ansprüche, **dadurch gekennzeichnet, dass** die Abdeckhaube (50) in der Schließposition an der Flascheneinheit (10) einrastet.

7. Auftragvorrichtung nach einem der vorhergehenden Ansprüche, **dadurch gekennzeichnet, dass** die Abdeckhaube (50) mit Auslassöffnungen (16, 18) der Einzelflaschen (12, 14) zusammenwirkende Dichtzapfen (52) aufweist.

8. Auftragvorrichtung nach einem der vorhergehenden Ansprüche, **dadurch gekennzeichnet, dass** die Abdeckhaube (50) sowie eine Einzelflasche (12) eine Formkodierung (58) aufweist, die ein falsches Aufstecken der Abdeckhaube (50) auf die Flascheneinheit (10) verhindert.

9. Auftragvorrichtung nach einem der vorhergehenden Ansprüche, **dadurch gekennzeichnet, dass** die beiden Einzelflaschen (12, 14) miteinander verbunden sind und ihre Auslassöffnungen (16, 18) von Abdeckhaubenbereichen druckdicht verschließbar sind, die insbesondere einer Druckdifferenz von mehr als 50 mBar, bevorzugt von mehr als 80 mBar, Stand halten.

10. Auftragvorrichtung nach einem der vorhergehenden Ansprüche, **dadurch gekennzeichnet, dass** der Abstand zwischen den Auslassöffnungen (16, 18) der Einzelflaschen (12, 14) dem Abstand zwischen den Vertiefungen (72, 74) einer Mischunterlage (70) der Auftragvorrichtung entspricht.

11. Auftragvorrichtung nach einem der vorhergehenden Ansprüche, **dadurch gekennzeichnet, dass** die Mischunterlage (70) voneinander räumlich und farblich getrennte Vertiefungen (72, 74) aufweist, wobei die Kodierung (78, 80) jeder Vertiefung (72, 74) der Kodierung (22) der zugehörigen Einzelflasche (12, 14) entspricht und insbesondere mindestens eine Zweifachkodierung der Mischunterlage (70) vorgesehen ist, die einer entsprechenden Zweifachkodierung der Einzelflasche (12, 14) entspricht.

12. Auftragvorrichtung nach Anspruch 11, **dadurch gekennzeichnet, dass** die Zweifachkodierung eine Farbkodierung (22) und eine Formkodierung (28) oder eine Farbkodierung (22) und eine Zeichenkodierung (20) ist.

13. Auftragvorrichtung nach einem der vorhergehenden Ansprüche, **dadurch gekennzeichnet, dass** die Vertiefungen (72, 74) durch einen insbesondere farblich geteilten Steg (76) voneinander getrennt sind.

14. Auftragvorrichtung nach einem der vorhergehenden Ansprüche, **dadurch gekennzeichnet, dass** die Vertiefungen der Mischunterlage (70) im Wesentlichen mittig angeordnet sind und die Mischunterlage (70) an ihren Rändern Beschriftungsfelder (86), insbesondere für Gebrauchsinformationen, aufweist.

15. Auftragvorrichtung nach einem der vorhergehenden Ansprüche, **dadurch gekennzeichnet, dass** die Auslassöffnungen (16, 18) in Kanülen (29, 31) ausgebildet sind, welche formschlüssig mit den Einzelflaschen (12, 14) in Verbindung bringbar sind.

16. Auftragvorrichtung nach einem der vorhergehenden Ansprüche, **dadurch gekennzeichnet, dass** die Kanülen (29, 31) eine Kodierung aufweisen, die der Kodierung der zugehörigen Einzelflasche (12, 14) entspricht.

## Claims

1. An application device for components of a dental material, comprising a mixing base, a cover and several individual bottles capable of receiving pourable components, each individual bottle (12, 14) having a coding (22, 25) visible from the outside, **characterized in that** the coding (22, 25) of each individual bottle corresponds to the coding (64, 66) of the respective cover region and the coding (76, 78) of the respective recess (72, 74) of the mixing base (70) and that the individual bottles (12, 14) are attached to each other positively, in particular via projections (40) and recesses (42) at surfaces facing one another.

2. The application device according to claim 1, **characterized in that** the individual bottles (12, 14) form a bottle unit (10) and are closeable by a common cover (50).

3. The application device according to claim 1 or 2, **characterized in that** the codings of the individual bottles (12, 14) form a coding of the bottle unit (10) which indicates the respective seated position of the cover (50) relative to the individual bottles (12, 14) and on the bottle unit (10).

4. The application device according to any of the preceding claims, **characterized in that** the recesses (72, 74) of the mixing base (70) can receive tips of application elements (94, 96) of the application device which application elements comprise a coding each which corresponds to the coding of the respective individual bottle (12, 14).

5. The application device according to any of the preceding claims, **characterized in that** the codings are shape identity codings and/or color codings (22).

6. The application device according to any of the preceding claims, **characterized in that** the cover (50) locks in place in the closing position at the bottle unit (10).

7. The application device according to any of the preceding claims, **characterized in that** the cover (50) includes sealing posts (52) which interact with outlet openings (16, 18) of the individual bottles (12, 14).

8. The application device according to any of the preceding claims, **characterized in that** the cover (50) as well as one individual bottle (12) includes a shape identity coding (58) which prevents a false disposition of the cover (50) on the bottle unit (10).

9. The application device according to any of the preceding claims, **characterized in that** both individual bottles (12, 14) are connected with one another and their outlet openings (16, 18) are closeable in a pressure-sealed manner by cover regions which in particular withstand a pressure difference of more than 50 mBar, preferably of more than 80 mBar.

10. The application device according to any of the preceding claims, **characterized in that** the distance between the outlet openings (16, 18) of the individual bottles (12, 14) corresponds to the distance between the recesses (72, 74) of a mixing base (70) of the application device.

11. The application device according to any of the preceding claims, **characterized in that** the mixing base (70) includes recesses (72, 74) which are separated from one another by space and color, the coding (78, 80) of each recess (72, 74) corresponding to the coding (22) of the respective individual bottle (12, 14) and in particular at least one double coding of the mixing base (70) being provided which corresponds to a respective double coding of the individual bottle (12, 14).

12. The application device according to claim 11, **characterized in that** the double coding is a color coding (22) and a shape coding (28) or a color coding (22) and a symbol coding (20).

13. The application device according to any of the preceding claims, **characterized in that** the recesses (72, 74) are separated from one another especially by a bar (76) of a differentiating color.

14. The application device according to any of the preceding claims, **characterized in that** the recesses of the mixing base (70) are arranged substantially centrally and that the mixing base (70) includes, along its edges, indicia fields (86), in particular for usage information.

15. The application device according to any of the preceding claims, **characterized in that** the outlet openings (16, 18) are formed in cannulae (29, 31) which can be connected positively with the individual bottles (12, 14).

16. The application device according to any of the preceding claims, **characterized in that** the cannulae (29, 31) each comprise a coding which corresponds to the coding of the respective individual bottle (12, 14).

## Revendications

1. Dispositif d'application pour des composants d'un produit dentaire avec une surface de mixage, un capot de recouvrement et plusieurs flacons individuels logeant plusieurs composants aptes à l'écoulement, chaque flacon individuel (12, 14) présentant un codage (22, 25) visible de l'extérieur, **caractérisé en ce que** le codage (22, 25) de chaque flacon individuel coïncide avec le codage (64, 66) de la zone de correspondante de capot de recouvrement et avec le codage (76, 78) du creux (72, 74) correspondant de la surface de mixage (70), et **en ce que** les flacons individuels (12, 14) sont fixés l'un contre l'autre par liaison de forme, en particulier par le biais de saillies (40) et de creux (42) sur leurs surfaces tournées l'une vers l'autre.

2. Dispositif d'application selon la revendication 1, **caractérisé en ce que** les flacons individuels (12, 14) forment une unité de flacon (10) et peuvent être fermés avec un capot de recouvrement (50) commun.

3. Dispositif d'application selon la revendication 1 ou 2, **caractérisé en ce que** les codages des flacons individuels (12, 14) forment un codage de l'unité de flacon (10) qui définit la position d'enfichage du capot de recouvrement (50) par rapport aux flacons individuels (12, 14) et sur l'unité de flacon (10).

4. Dispositif d'application selon une des revendications précédentes, **caractérisé en ce que** des pointes d'éléments d'application (94, 69) du dispositif d'application peuvent être mises en place dans les creux (72, 74) de la surface de mixage (70) et présentent respectivement un codage qui correspond au codage du flacon individuel (12, 14) correspondant.

5. Dispositif d'application selon une des revendications précédentes, **caractérisé en ce que** les codages sont des codages de façonnage et/ou des codages de coloration (22).

6. Dispositif d'application selon une des revendications précédentes, **caractérisé en ce que** le capot de recouvrement (50) s'enclenche dans la position de fermeture sur l'unité de flacon (10).

7. Dispositif d'application selon une des revendications précédentes, **caractérisé en ce que** le capot de recouvrement (50) présente des embouts étanches (52) coopérant avec des ouvertures de sortie (16, 18) des flacons individuels (12, 14).

8. Dispositif d'application selon une des revendications précédentes, **caractérisé en ce que** le capot de recouvrement (50), tout comme un flacon individuel (12), présente un codage de forme (58) qui empêche un enfichage erroné du capot de recouvrement (50) sur le flacon individuel (10).

9. Dispositif d'application selon une des revendications précédentes, **caractérisé en ce que** les deux flacons individuels (12, 14) sont raccordés l'un à l'autre, et **en ce que** leurs ouvertures de sortie (16, 18) peuvent être fermées de façon étanche à la pression par des zones de capot de recouvrement qui résistent en particulier à une différence de pression de plus de 50 mbars, de préférence de plus de 80 mbars.

10. Dispositif d'application selon une des revendications précédentes, **caractérisé en ce que** la distance entre les ouvertures de sortie (16, 18) des flacons individuels (12, 14) correspond à la distance entre les creux (72, 74) d'une surface de mixage (70) du dispositif d'application.

11. Dispositif d'application selon une des revendications précédentes, **caractérisé en ce que** la surface de mixage (70) présente des creux (72, 74) séparés l'un de l'autre dans l'espace et par des couleurs, le codage (78, 80) de chaque creux (72, 74) correspondant au codage (22) du flacon individuel (12, 14) correspondant, et en particulier au moins un codage double de la,surface de mixage (70) étant prévu, qui correspond à un codage double correspondant du flacon individuel (12, 14).

12. Dispositif d'application selon la revendication 11, **caractérisé en ce que** le codage double est un codage de couleur (22) et un codage de forme (28) ou un codage de couleur (22) et un codage par signes (20).

13. Dispositif d'application selon une des revendications précédentes, **caractérisé en ce que** les creux (72, 74) sont séparés l'un de l'autre par une moulure (76) en particulier à division de couleur.

14. Dispositif d'application selon une des revendications précédentes, **caractérisé en ce que** les creux de la surface de mixage (70) sont essentiellement disposés de façon centrée, et **en ce que** la surface de mixage (70) présente au niveau de ses bords des champs d'inscription (86), en particulier pour des informations d'utilisation.

15. Dispositif d'application selon une des revendications précédentes, **caractérisé en ce que** les ouvertures de sortie (16, 18) sont réalisées dans des canules (29, 31) qui peuvent être raccordées par liaison de forme aux flacons individuels (12, 14).

16. Dispositif d'application selon une des revendications précédentes, **caractérisé en ce que** les canules (29, 31) présentent un codage qui correspond au codage du flacon individuel (12, 14) correspondant.
